# EUROPEAN PATENT APPLICATION

(11) **EP 4 524 994 A1**
(43) Date of publication of application: **19.03.2025**
(21) Application number: 23802439.2
(22) Date of filing: 14.02.2023
(51) Int. Cl.: G21C 7/12, G21C 17/12, G01D 5/347

(54) **METHOD AND APPARATUS FOR DETERMINING ROD POSITION OF CONTROL ROD OF PRESSURIZED WATER REACTOR, AND ROD POSITION MEASUREMENT SYSTEM**

(30) Priority: 12.05.2022 CN 202210516379
(71) Applicant: CNNP NUCLEAR POWER OPERATIONS MANAGEMENT CO., LTD., Jiaxing, Zhejiang 314300 (CN); QINSHAN NUCLEAR POWER COMPANY LIMITED, Jiaxing, Zhejiang 314300 (CN)
(72) Inventor: FANG, Jintu, Jiaxing, Zhejiang 314300 (CN); LI, Yi, Jiaxing, Zhejiang 314300 (CN); DONG, Yiwei, Jiaxing, Zhejiang 314300 (CN); MA, Yiming, Jiaxing, Zhejiang 314300 (CN); REN, Jie, Jiaxing, Zhejiang 314300 (CN); QI, Xiao, Jiaxing, Zhejiang 314300 (CN); HU, Jing, Jiaxing, Zhejiang 314300 (CN); WANG, Haojun, Jiaxing, Zhejiang 314300 (CN)
(74) Representative: Cohausz & Florack
(86) International application number: PCT/CN2023/075790
(87) International publication number: WO 2023/216663

(57) **Abstract**

The present disclosure discloses a method and an apparatus for determining a rod position of a control rod of a pressurized water reactor, a rod position measurement system and a non-volatile computer-readable storage medium, and belongs to the technical field of nuclear power. In the method for determining a rod position of a control rod of a pressurized water reactor, a rod position determination condition of each rod position of a full stroke is determined according to a Gray code bit signal voltage of the rod position of the full stroke, and Gray code bits and corresponding Gray code bit signal voltage values are enabled to correspond to rod positions, so that according to a real-time signal and by means of a rod position interval and the rod position determination condition, each Gray code bit signal, which is currently obtained in real time, can be accurately positioned to each rod position point, so that rapid and accurate full-stroke rod position measurement is realized, accurate full-core real-time rod position information is provided for an operator to perform monitoring, and precise full-core and full-fuel-cycle rod position measurement data is provided for use in reactor core operation tracking, reactor core safety calculation and fine fuel management.

## Description

### TECHNICAL FIELD

The present disclosure belongs to the technical field of nuclear power, and specifically relates to a method and an apparatus for determining a rod position of a control rod of a pressurized water reactor, and a rod position measurement system.

### BACKGROUND

In the existing art, a pressurized water reactor rod control system controls reactivity by controlling changes in a position of a control rod, which contains neutron absorbers, in a reactor core, and ensures safe and stable operation of the reactor under set conditions, while a rod position measurement system provides real-time rod position indications of all control rod groups of the reactor to facilitate real-time monitoring by an operator, and provides full-core and full-fuel-cycle rod position measurement data for use in reactor core operation tracking, reactor core safety calculation and fuel management. The Gray code based rod position measurement technology is widely adopted in the industry, in which discontinuous indications at an interval of 5 to 8 mechanical steps are realized through a multi-bit Gray code signal tuning result.

In the Gray code based pressurized water reactor full-stroke rod position continuous measurement technology, a rod position interval (each includes a plurality of mechanical steps, such as 5 to 8 mechanical steps) where the control rod is located is determined from a multi-bit Gray code signal tuning result (for example, a 5-bit to 6-bit Gray code signal tuning result), but the rod control system cannot provide a "step-to-bit" signal interface for each mechanical step in the moving process of the control rod, which may severely affect accuracy of the monitoring and operation and maintenance work of the pressurized water reactor core. Therefore, how to measure an accurate real-time rod position of the control rod has become an urgent problem to be solved.

### SUMMARY

To overcome the problems in the existing art, there is provided a method and an apparatus for determining a rod position of a control rod of a pressurized water reactor, and a rod position measurement system.

According to one aspect of the embodiments of the present disclosure, there is provided a method for determining a rod position of a control rod of a pressurized water reactor, including:
step 100, determining a rod position interval to which the control rod currently belongs according to a currently acquired Gray code signal tuning result and a correspondence relationship between Gray code signal tuning results and rod position intervals;
step 101, determining a plurality of rod position determination conditions corresponding to the rod position interval to which the control rod currently belongs, wherein each rod position determination condition corresponds to one rod position, and each rod position determination condition includes a voltage value interval of a Gray code bit signal;
step 102, judging whether a voltage value of each Gray code bit signal currently acquired is matched with any of determined plurality of rod position determination conditions; and
step 103, taking a rod position corresponding to the rod position determination condition matched with the voltage value of the Gray code bit signal currently acquired as a current measured rod position of the control rod.

**In** one possible implementation, the method further includes:
step 200, performing, in a process of the control rod stepping from a start rod position to an end rod position, voltage sampling on Gray code bit signals output from the control rod and detected by a rod position detector at a preset frequency to obtain a plurality of data sets, wherein one data set is obtained in each sampling operation, each sampled data set includes voltage values of the Gray code bit signals obtained in the sampling operation, and the data sets are arranged according to a sampling sequence;
step 201, determining, according to the number of rod positions of the control rod and the plurality of data sets, a calculated voltage value of a target Gray code bit signal corresponding to each rod position from the start rod position to the end rod position;
step 202, determining, for each rod position, a calculation parameter of the rod position according to the calculated voltage value of the target Gray code bit signal of the rod position and the calculated voltage value of the target Gray code bit signal of a next rod position of the rod position; and
step 203, determining, according to the calculation parameter and the rod position interval corresponding to each rod position, a plurality of rod position determination conditions corresponding to each rod position interval.

**In** one possible implementation, step 201 further includes:
step 2010, determining a data set between every two adjacent rod positions according to the number of rod positions of the control rod from the start rod position to the end rod position and the sampling sequence of the plurality of data sets; and
step 2011, determining, for each rod position, a calculation set from a plurality of data sets between the rod position and rod positions before and after the rod position, and determining, according to the calculation set, the calculated voltage value of the target Gray code bit signal of the rod position, wherein the calculation set includes voltage values of a plurality of target Gray code bit signals, and a difference between the voltage values of the plurality of target Gray code bit signals meets a preset condition.

In one possible implementation, step 201 further includes:
step 2012, taking, for each rod position, a Gray code bit signal with the maximum change in voltage value from the rod position to a next rod position as the target Gray code bit signal.

According to another aspect of the embodiments of the present disclosure, there is provided an apparatus for determining a rod position of a control rod of a pressurized water reactor, including:
a first determination module configured to determine a rod position interval to which the control rod currently belongs according to a currently acquired Gray code signal tuning result and a correspondence relationship between Gray code signal tuning results and rod position intervals;
a second determination module configured to determine a plurality of rod position determination conditions corresponding to the rod position interval to which the control rod currently belongs, wherein each rod position determination condition corresponds to one rod position, and each rod position determination condition includes a voltage value interval of a Gray code bit signal;
a judgment module configured to judge whether a voltage value of each Gray code bit signal currently acquired is matched with any of determined plurality of rod position determination conditions; and
a third determination module configured to take a rod position corresponding to the rod position determination condition matched with the voltage value of the Gray code bit signal currently acquired as a current measured rod position of the control rod.

In one possible implementation, the apparatus further includes:
a sampling module configured to perform, in a process of the control rod stepping from a start rod position to an end rod position, voltage sampling on Gray code bit signals output from the control rod and detected by a rod position detector at a preset frequency to obtain a plurality of data sets, wherein one data set is obtained in each sampling operation, each sampled data set includes voltage values of the Gray code bit signals obtained in the sampling operation, and the data sets are arranged according to a sampling sequence;
a fourth determination module configured to determine, according to the number of rod positions of the control rod and the plurality of data sets, a calculated voltage value of a target Gray code bit signal corresponding to each rod position from the start rod position to the end rod position;
a fifth determination module configured to determine, for each rod position, a calculation parameter of the rod position according to the calculated voltage value of the target Gray code bit signal of the rod position and the calculated voltage value of the target Gray code bit signal of a next rod position of the rod position; and
a sixth determination module configured to determine, according to the calculation parameter and the rod position interval corresponding to each rod position, a plurality of rod position determination conditions corresponding to each rod position interval.

In one possible implementation, the fourth determination module further includes:
a first determination submodule configured to determine a data set between every two adjacent rod positions according to the number of rod positions of the control rod from the start rod position to the end rod position and the sampling sequence of the plurality of data sets; and
a second determination submodule configured to determine, for each rod position, a calculation set from a plurality of data sets between the rod position and rod positions before and after the rod position, and determine, according to the calculation set, the calculated voltage value of the target Gray code bit signal of the rod position, wherein the calculation set includes voltage values of a plurality of target Gray code bit signals, and a difference between the voltage values of the plurality of target Gray code bit signals meets a preset condition.

In one possible implementation, the fourth determination module further includes:
a third determination submodule configured to take, for each rod position, a Gray code bit signal with the maximum change in voltage value from the rod position to a next rod position as the target Gray code bit signal.

According to still another aspect of the embodiments of the present disclosure, there is provided an apparatus for determining a rod position of a control rod of a pressurized water reactor, including:
a processor; and
a memory configured to store processor-executable instructions;
wherein the processor is configured to implement the above method.

According to yet another aspect of the embodiments of the present disclosure, there is provided a non-volatile computer-readable storage medium having computer program instructions stored thereon, wherein the computer program instructions, when executed by a processor, cause the above method to be implemented.

According to still another aspect of the embodiments of the present disclosure, there is provided a pressurized water reactor rod position measurement system, wherein the pressurized water reactor rod position measurement system includes the apparatus for determining a rod position of a control rod of a pressurized water reactor as described above, and the rod position measurement system is configured to provide real-time rod position indications of control rod groups of the reactor.

The present disclosure has the following beneficial effects: in the method for determining a rod position of a control rod of a pressurized water reactor of the present disclosure, a rod position determination condition of each rod position of a full stroke is determined according to a Gray code bit signal voltage of the rod position of the full stroke, and Gray code bits and corresponding Gray code bit signal voltage values are enabled to correspond to rod positions, so that according to a real-time signal and by means of a rod position interval and the rod position determination condition, each Gray code bit signal, which is currently obtained in real time, can be accurately positioned to each rod position point, so that rapid and accurate full-stroke rod position measurement is realized, accurate full-core real-time rod position information is provided for an operator to perform monitoring, and precise full-core and full-fuel-cycle rod position measurement data is provided for use in reactor core operation tracking, reactor core safety calculation and fine fuel management.

### BRIEF DESCRIPTION OF DRAWINGS

FIG. 1 is a flowchart of a method for determining a rod position of a control rod of a pressurized water reactor according to an exemplary embodiment;
FIG. 2 is a flowchart of a method for determining a rod position of a control rod of a pressurized water reactor according to an exemplary embodiment; and
FIG. 3 is a block diagram of an apparatus for determining a rod position of a control rod of a pressurized water reactor according to an exemplary embodiment.

### DETAIL DESCRIPTION OF EMBODIMENTS

The present disclosure will be further explained in detail below in conjunction with the drawings and specific embodiments. In the description of the embodiments of the present application, the terms "first" and "second" are used for descriptive purposes only and are not to be construed as indicating or implying relative importance or to implicitly indicate the number of technical features indicated. Further, in the description of the embodiments of the present disclosure, "a plurality" means two or more unless otherwise specified.

It should be noted that the method for determining a rod position of a control rod of a pressurized water reactor of the present disclosure may be executed by a terminal device, where, for example, the terminal device may be a server or a personal computer, and the type of the terminal device is not limited in the embodiments of the present disclosure. In addition, the terminal device may be integrated in the pressurized water reactor rod position measurement system, or may be separated from the pressurized water reactor rod position measurement system, which is not limited in the present disclosure.

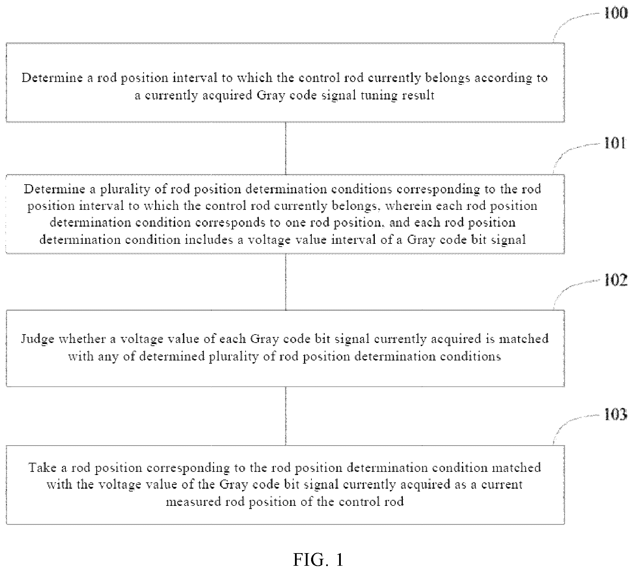

FIG. 1 is a flowchart of a method for determining a rod position of a control rod of a pressurized water reactor according to an exemplary embodiment. As shown in FIG. 1, the method may include the following steps 100 to 103.

At step 100, determining a rod position interval to which the control rod currently belongs according to a currently acquired Gray code signal tuning result and a correspondence relationship between Gray code signal tuning results and rod position intervals.

Generally speaking, the rod control system of the pressurized water reactor may control the control rod to move step by step at a fixed step length, and the time required for each step is set by a control program and is typically about 700 to 800mS (milliseconds). A Gray code rod position detector in the rod position measurement system continuously detects the position of the control rod and outputs a Gray code signal in real time. The output Gray code signal is used to determine a Gray code signal tuning result through a Gray code signal conditioning and tuning circuit, and the terminal device may obtain the Gray code signal tuning result output from the rod position measurement system in real time. It should be noted that the terminal device may obtain the real-time Gray code signal tuning result through a wireless communication network or a wired communication network, which is not limited in the present disclosure.

By way of example, in step 100, a correspondence relationship between different Gray code signal tuning results and different rod position intervals is typically preset in the terminal device, so that the terminal device can determine the rod position interval to which the control rod currently belongs according to the real-time Gray code signal tuning result currently acquired and the correspondence relationship. For example, it may be preset in the terminal device that a Gray code signal tuning result 00001 corresponds to a rod position interval including rod positions 0 to 7, a Gray code signal tuning result 00011 corresponds to a rod position interval including rod positions 8 to 15, so on and so forth. If the terminal device acquires a Gray code signal tuning result 00001 now, then it can be determined that this Gray code tuning result corresponds to the rod position interval including rod positions 0 to 7.

At step 101, determining a plurality of rod position determination conditions corresponding to the rod position interval to which the control rod currently belongs, where each rod position determination condition corresponds to one rod position, and each rod position determination condition includes a voltage value interval of a Gray code bit signal.

By way of example, in step 101, a plurality of rod position determination conditions corresponding to each rod position interval may be determined in advance according to changes in the voltage value of the Gray code bit signal with the rod position, where each rod position determination condition may include a voltage value interval of a Gray code bit signal, and each rod position determination condition may correspond to one rod position. Table 1 shows an example of a plurality of rod position determination conditions corresponding to a rod position interval. As shown in table 1, rod positions 0 to 7 in the rod position interval may correspond to 7 rod position determination conditions, where each rod position determination condition may include a voltage value interval of a certain Gray code bit signal. For example, the rod position determination condition corresponding to rod position 0 may be that a voltage value of a Gray code A bit signal (an example of Gray code bit signal) is not greater than 4 (an example of voltage value interval). The rod position determination condition may further include a voltage value interval of a plurality of different Gray code bit signals. For example, the rod position determination condition corresponding to rod position 4 may be that the voltage value of the Gray code A bit signal is greater than 7, and a voltage value of a Gray code B bit signal is not greater than 0.

**Table 1 A plurality of rod position determination conditions corresponding to the rod position interval**

| Rod position | Gray code tuning result (EDCBA) | Rod position determination condition |
|---|---|---|
| 0 | 00001 | Voltage value of Gray code A bit signal not greater than 4 |
| 1 | 00001 | Voltage value of Gray code A bit signal greater than 4 and not greater than 5 |
| 2 | 00001 | Voltage value of Gray code A bit signal greater than 5 and not greater than 6 |
| 3 | 00001 | Voltage value of Gray code A bit signal greater than 6 and not greater than 7 |
| 4 | 00001 | Voltage value of Gray code A bit signal greater than 7, and voltage value of Gray code B bit signal not greater than 0 |
| 5 | 00001 | Voltage value of Gray code B bit signal greater than 0 and not greater than 1 |
| 6 | 00001 | Voltage value of Gray code B bit signal greater than 1 and not greater than 2 |
| 7 | 00001 | Voltage value of Gray code B bit signal greater than 2 and not greater than 3 |

At step 102, judging whether a voltage value of each Gray code bit signal currently acquired is matched with any of determined plurality of rod position determination conditions; and

At step 103, taking a rod position corresponding to the rod position determination condition matched with the voltage value of the Gray code bit signal currently acquired as a current measured rod position of the control rod.

In steps 102 to 103, still taking the above example, if the acquired Gray code signal tuning result is 00001, which corresponds to a voltage value 6.5 of the Gray code A bit signal, then it can be firstly determined that this Gray code signal tuning result corresponds to the rod position interval including rod positions 0 to 7, and further according to the plurality of rod position determination conditions corresponding to rod positions 0 to 7 in table 1, it can be determined that the Gray code signal corresponds to rod position 3.

In the method for determining a rod position of a control rod of a pressurized water reactor of the present disclosure, a rod position determination condition of each rod position of a full stroke is determined according to a Gray code bit signal voltage of the rod position of the full stroke, and Gray code bits and corresponding Gray code bit signal voltage values are enabled to correspond to rod positions, so that according to a real-time signal and by means of a rod position interval and the rod position determination condition, each Gray code bit signal, which is currently obtained in real time, can be accurately positioned to each rod position point, so that rapid and accurate full-stroke rod position measurement is realized, accurate full-core real-time rod position information is provided for an operator to perform monitoring, and precise full-core and full-fuel-cycle rod position measurement data is provided for use in reactor core operation tracking, reactor core safety calculation and fine fuel management.

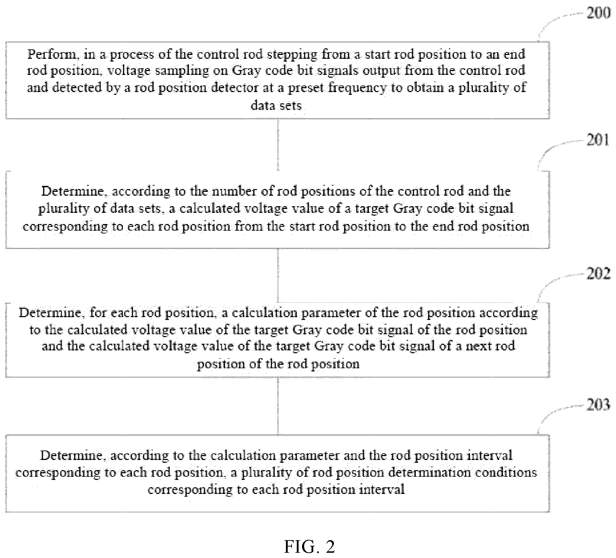

FIG. 2 is a flowchart of a method for determining a rod position of a control rod of a pressurized water reactor according to an exemplary embodiment. It should be noted that steps 200 to 203 may be performed before step 100 or step 101, which is not limited in the present disclosure. As shown in FIG. 2, the method further includes the following steps 200 to 203.

At step 200, performing, in a process of the control rod stepping from a start rod position to an end rod position, voltage sampling on Gray code bit signals output from the control rod and detected by a rod position detector at a preset frequency to obtain a plurality of data sets, where one data set is obtained in each sampling operation, each sampled data set includes voltage values of the Gray code bit signals obtained in the sampling operation, and the data sets are arranged according to a sampling sequence.

By way of example, in step 200, the rod control system may operate the control rod to move in a unidirectional manner from a start rod position to an end rod position in the unit of one mechanical step, where specific locations of the start rod position and the end rod position may be selected according to the requirement of measuring the rod position, which are not limited in the present disclosure. For example, the start rod position may be a zero step rod position, and the end rod position may be a reactor top rod position. For another example, the start rod position may be a reactor top rod position, and the end rod position may be a zero step rod position.

In the process of the control rod stepping from the start rod position to the end rod position, a rod position detector detects the control rod and outputs a Gray code signal, including a plurality of Gray code bit signals (for example, the Gray code signal may include a Gray code A bit signal, a Gray code B bit signal, a Gray code C bit signal, a Gray code D bit signal, and a Gray code E bit signal; it should be noted that the number of bits of the Gray code signal is not limited in the present disclosure). Voltage sampling may be performed on the Gray code bit signals output from the rod position detector at a preset frequency to obtain a plurality of data sets. For example, the plurality of data sets may include: a 1st data set {Va1, Vb1, Vc1, Vd1, Ve1} obtained by performing a first voltage sampling operation on the Gray code bit signals, a 2nd data set {Va2, Vb2, Vc2, Vd2, Ve2} obtained by performing a second voltage sampling operation on the Gray code bit signals,..., and an n^{th} data set {Van, Vbn, Vcn, Vdn, Ven} obtained by performing an n^{th} voltage sampling operation on the Gray code bit signals, where n is the total number of sampling operations.

At step 201, determining, according to the number of rod positions of the control rod and the plurality of data sets, a calculated voltage value of a target Gray code bit signal corresponding to each rod position from the start rod position to the end rod position.

By way of example, step 201 may include: allocating, according to the number of rod position intervals between the start rod position and the end rod position, the plurality of data sets to the rod positions equally according to the sampling sequence, where for each rod position, the voltage value of the target Gray code signal in the data set with the largest sampling sequence number between the rod position and a next rod position may be taken as a calculated voltage value of the target Gray code bit signal corresponding to the rod position.

By way of example, step 201 may further include steps 2010 and 2011.

At step 2010, determining a data set between every two adjacent rod positions according to the number of rod positions of the control rod from the start rod position to the end rod position and the sampling sequence of the plurality of data sets.

For example, according to changes in the Gray code bit signal sampling voltage between adjacent rod positions, data sets obtained by sampling between the beginning of the start rod position and the end of the end rod position may be selected, and the number of such data sets is determined (in this way, invalid sampling data obtained before the beginning of the start rod position and after the end of the end rod position can be effectively filtered out); The number of rod position intervals between the start rod position and the end rod position can be further determined, and a ratio of the determined number of data sets to the determined number of rod position intervals is taken as the number of data sets between two adjacent rod positions. Then according to the number of data sets between two adjacent rod positions and the sampling sequence of the plurality of selected data sets, the data sets between every two adjacent rod positions are determined. For example, if the number of data sets between two adjacent rod positions is determined to be 5, then it can be determined that data sets numbered 11 to 16 are provided between rod position 0 and rod position 1, data sets numbered 17 to 22 are provided between rod position 1 and rod position 2, so on and so forth.

It should be noted that a ratio of the total number of sampling operations to the total number of rod positions may also be used as the number of data sets between two rod positions, or a ratio of the number of sampling operations within a certain period of time to the number of rod positions corresponding to the period of time may be used as the number of data sets between two rod positions, which is not limited in the present disclosure.

At step 2011, determining, for each rod position, a calculation set from a plurality of data sets between the rod position and rod positions before and after the rod position, and determining, according to the calculation set, the calculated voltage value of the target Gray code bit signal of the rod position, where the calculation set includes voltage values of a plurality of target Gray code bit signals, and a difference between the voltage values of the plurality of target Gray code bit signals meets a preset condition.

By way of example, the target Gray code bit signal corresponding to each rod position may be preset in the terminal device, so in step 2011, the corresponding target Gray code bit signal may be determined for each rod position, and the voltage value of the target Gray code bit signal with the largest sampling sequence number between the rod position and a previous rod position may be taken as a target voltage value. The target voltage value, and voltage values of the target Gray code bit signals in N (where N is a positive integer) data sets before and N data sets after the target voltage value, are selected as a temporary sampling data group. It is determined whether a difference of the voltage values in the temporary sampling data group meets a preset condition (for example, a difference of the voltage values in the sampling data group is less than a difference threshold, or a variance of the voltage values in the sampling data group is less than a variance threshold, or the like; or the voltage values in the sampling data group all belong to a preset threshold interval, which is not specifically limited in the present disclosure). If it is determined that the difference of the voltage values does not meet the preset condition, the target voltage value, and voltage values of the target Gray code bit signals in N+1 data sets before and N-1 data sets after the target voltage value, are selected again as a temporary sampling data group, and it is further determined whether the voltage values in the new temporary sampling data group meet the preset condition, so on and so forth. A new temporary sampling data group is continuously acquired until it is determined that the voltage values in the acquired temporary sampling data group meet the preset condition. Then the temporary sampling data group is used as a sampling data set, and a calculated voltage value of the Gray code corresponding to the rod position is determined according to the voltage values in the sampling data set (for example, an average or a weighted average or a median or any one of the voltage values in the sampling data set is taken as the calculated voltage value of the Gray code corresponding to the rod position; the specific manner of obtaining the calculated voltage value from the voltage values in the sampling data set is not limited in the present disclosure).

Table 2 shows an example of correspondence relationship between data sets and rod positions. As shown in Table 2, the following description is given by taking rod position 6 as an example:

For rod position 6, the Gray code B bit signal with the largest change in voltage value may be taken as the target Gray code bit signal. The voltage values of 3 Gray code B bit signals may be selected between the sampling sequence number 110 corresponding to rod position 5 and the sampling sequence number 140 corresponding to rod position 7 to form a temporary sampling data group (for example, the B bit voltage values in the data sets numbered 124 to 126). Then it is determined whether a difference of the voltage values in the temporary sampling data group is less than a difference threshold (an example of preset condition), and the difference of the voltage values may be required to be as small as possible. If it is determined that the difference of the voltage values is not less than the difference threshold, a new temporary sampling data group may be acquired by moving a sampling window at a step length of one voltage value (for example, by moving the data sampling window in a direction approaching smaller sequence numbers, and taking the B bit voltage values in the data sets numbered 123 to 125 as a new temporary sampling data group). Then it is further determined whether a difference of the voltage values in the temporary sampling data group is less than a difference threshold. These steps are repeated until it is determined that the difference of the B bit voltage values in the acquired data sets numbered 122 to 124 meets the preset condition, and since the maximum sampling sequence number 124 is closest to the sampling sequence number 125, the calculation set is determined to be {237, 237, 237}, and the calculated voltage value of the Gray code B bit signal corresponding to rod position 6 is determined to be 237.

**Table 2 Correspondence relationship between data sets and rod positions**

| Sequence number of sampling data | Rod position corresponding to calculation sequence number of sampling data | Gray code E bit voltage | Gray code D bit voltage | Gray code C bit voltage | Gray code B bit voltage | Gray code A bit voltage |
|---|---|---|---|---|---|---|
| 110 | 5 | 380 | 33 | 3 | 195 | 512 |
| 111 | | 380 | 33 | 4 | 203 | 510 |
| 112 | | 380 | 33 | 4 | 213 | 508 |
| 113 | | 380 | 33 | 3 | 220 | 507 |
| 114 | | 380 | 33 | 3 | 224 | 507 |
| 115 | | 380 | 33 | 3 | 228 | 506 |
| 116 | | 380 | 33 | 3 | 231 | 506 |
| 117 | | 380 | 33 | 3 | 233 | 506 |
| 118 | | 380 | 33 | 3 | 234 | 506 |
| 119 | | 380 | 33 | 3 | 235 | 506 |
| 120 | | 380 | 33 | 3 | 236 | 506 |
| 121 | | 380 | 33 | 3 | 236 | 506 |
| 122 | | 380 | 33 | 3 | 237 | 506 |
| 123 | | 380 | 33 | 3 | 237 | 506 |
| 124 | | 380 | 33 | 3 | 237 | 506 |
| 125 | 6 | 380 | 33 | 3 | 239 | 505 |
| 126 | | 380 | 33 | 3 | 249 | 504 |
| 127 | | 380 | 33 | 3 | 258 | 504 |
| 128 | | 380 | 33 | 3 | 265 | 503 |
| 129 | | 380 | 33 | 3 | 270 | 503 |
| 130 | | 380 | 33 | 3 | 274 | 503 |
| 131 | | 380 | 33 | 3 | 276 | 502 |
| 132 | | 380 | 33 | 3 | 278 | 502 |
| 133 | | 380 | 33 | 3 | 280 | 503 |
| 134 | | 380 | 33 | 3 | 281 | 503 |
| 135 | | 380 | 33 | 3 | 282 | 503 |
| 136 | | 380 | 33 | 3 | 282 | 503 |
| 137 | | 380 | 33 | 4 | 283 | 503 |
| 138 | | 380 | 33 | 4 | 283 | 502 |
| 139 | | 380 | 33 | 4 | 283 | 502 |
| 140 | 7 | 380 | 33 | 4 | 287 | 502 |

In addition, in step 2011, for each rod position, the voltage values of the target Gray code bit signals in each data set between that rod position and the rod positions before and after the rod are traversed to select M (where M is a positive integer) pieces of voltage value data with a difference meeting the preset condition and consecutive sampling sequence numbers as the sampling data set.

Since the control rod is influenced by a strong alternating drive current (typically in the order of tens of amperes) during movement, voltages of the Gray code bit signals have certain fluctuations. Further, since the voltages of the Gray code bit signals output from the rod position detector when the control rod is stationary are relatively stable and has a strong correspondence relationship with the position of the control rod, the calculated voltage value corresponding to the rod position is determined according to a consecutive voltage value sequence with the minimum difference in the present disclosure, which can reflect the voltage signal state of the control rod more accurately when stopped at each rod position, and thereby help to determine the current rod position of the control rod more accurately.

At step 202, determining, for each rod position, a calculation parameter of the rod position according to the calculated voltage value of the target Gray code bit signal of the rod position and the calculated voltage value of the target Gray code bit signal of a next rod position of the rod position.

By way of example, in step 202, for each rod position, a calculation parameter of the rod position may be determined according to the calculated voltage value of the target Gray code bit signal of the rod position and the calculated voltage value of the target Gray code bit signal of a next rod position of the rod position (for example, an average or a weighted average or the like of the calculated voltage value of the target Gray code bit signal of the rod position and the calculated voltage value of the target Gray code bit signal of a next rod position of the rod position may be taken as the calculation parameter of the rod position; the specific process is not limited in the present disclosure).

At step 203, determining, according to the calculation parameter and the rod position interval corresponding to each rod position, a plurality of rod position determination conditions corresponding to each rod position interval.

In step 203, under the condition that the calculation parameter corresponding to each rod position is obtained, a rod position determination condition, including a Gray code bit and a voltage value interval of Gray code bit signals corresponding to the Gray code bit, may be formed according to the calculation parameters of target Gray code bit signals of adjacent rod positions. As shown in table 1, taking rod position 0 and rod position 1 as an example, the calculation parameter of the target Gray code bit signal corresponding to rod position 0 is 4, and the calculation parameter of the target Gray code bit signal corresponding to rod position 1 is 5, so the rod position determination condition for rod position 0 is that: the voltage value of the Gray code A bit signal is not greater than 4, and the rod position determination condition for rod position 1 is that: the voltage value of the Gray code A bit signal is greater than 4, and not greater than 5.

In one possible implementation, step 201 may further include step 2012, where step 2012 may be performed between step 2010 and step 2011. In step 2012, for each rod position, a Gray code bit signal with the maximum change in voltage value from the rod position to a next rod position may be taken as the target Gray code bit signal. For example, as shown in table 2 and taking rod position 6 as an example, between rod position 6 and rod position 7 and according to the sampling sequence, the voltage values of the Gray code C bit signal, the Gray code D bit signal, and the Gray code E bit signal do not change (where the change of the voltage values may be expressed as a difference between the maximum value and the minimum value of the voltage values, a variance of the voltage values, a slope of the curve fitted to the voltage values, and the like, which is not specifically limited in the present disclosure). The change of the voltage values {505, 504, 504, 503, 503, 503, 502, 502, 503, 503, 503, 503, 503, 502, 502, 502} corresponding to the Gray code A bit signal is smaller, while the change of the voltage values {239, 249, 258, 265, 270, 274, 276, 278, 280, 281, 282, 282, 283, 283, 283, 287} corresponding to the Gray code B bit signal is the largest, so the Gray code B bit signal is taken as the target Gray code bit signal for rod position 6.

In this manner, the Gray code bit signal with the largest change in voltage value is selected for each rod position, so that the determination conditions for different rod positions are more distinguishable from each other, the requirement on accuracy of the acquired voltage value is lower, and the rod position corresponding to the Gray code signal can be determined more accurately.

In one application example, the following explanation is made for the method for determining a rod position of a control rod of a pressurized water reactor of the present disclosure:
1) starting a rod position measurement channel to continuously sample voltages of the Gray code bit signal at a high speed;
2) setting a start rod position and an end rod position, a control rod movement reference speed, a Gray code bit signal voltage sampling result reading period, and an allowable deviation in voltage of the Gray code bit signals when the rod is in a stationary state, where the set control rod movement reference speed and Gray code bit signal voltage sampling result reading period can ensure that the number of sampling data pieces for voltages of the Gray code bit signals in the stationary state of the control rod is not less than 3;
3) starting continuous sampling of voltages of the Gray code bit signals, and adding sampling sequence numbers to, and storing, sampling results;
4) moving the control rod by a rod control system at the reference speed in a direction from the start rod position to the end rod position until reaching the end rod position.
5) stopping sampling the voltages of the Gray code signals when confirming that the control rod has reached the end rod position;
6) calculating the number of data sets between adjacent rod positions according to the numbers of data sets at a 1st sampling rod position and a 2nd last sampling rod position as well as rod position interval data;
7) determining, considering remainder correction of the number of the sampling data pieces between adjacent rod positions, sampling a sequence number of a data set corresponding to each rod position in the full stroke;
8) forming a temporary sampling data group with voltage values corresponding to the target Gray code bit signals in 3 data sets, i.e., the data set corresponding to the sampling sequence number and data sets corresponding to previous and next sequence numbers of the sampling sequence number;
9) re-obtaining, if a deviation of the voltage values in the temporary sampling data group does not meet the set allowable deviation, a temporary sampling data group from data sets corresponding to adjacent sequence numbers of the sampling sequence number by moving a sampling window forwards or backwards until the deviation of the voltage values in the temporary sampling data group meets the set allowable deviation, and then taking the temporary sampling data group as a valid sampling data group;
10) taking an average of the voltage values in the valid sampling data group a calculated voltage value of the corresponding rod position;
11) obtaining a rod position determination condition corresponding to each rod position according to the calculated voltage value of the target Gray code bit signals of each rod position;
12) determining a rod position determination logic according to the number of Gray code bits from the rod position detector and the number of full-stroke rod position steps, where the rod position determination logic includes a correspondence relationship among Gray code bit tuning results, intervals of the measured rod positions, and rod position determination conditions; and
13) determining the currently measured rod position according to the current tuning result of each Gray code bit signal and the correspondence relationship among Gray code bit tuning results, intervals of the measured rod positions and rod position determination conditions.

In one possible implementation, there is provided an apparatus for determining a rod position of a control rod of a pressurized water reactor, including:
a first determination module configured to determine a rod position interval to which the control rod currently belongs according to a currently acquired Gray code signal tuning result and a correspondence relationship between Gray code signal tuning results and rod position intervals;
a second determination module configured to determine a plurality of rod position determination conditions corresponding to the rod position interval to which the control rod currently belongs, where each rod position determination condition corresponds to one rod position, and each rod position determination condition includes a voltage value interval of a Gray code bit signal;
a judgment module configured to judge whether a voltage value of each Gray code bit signal currently acquired is matched with any of determined plurality of rod position determination conditions; and
a third determination module configured to take a rod position corresponding to the rod position determination condition matched with the voltage value of the Gray code bit signal currently acquired as a current measured rod position of the control rod.

In one possible implementation, the apparatus further includes:
a sampling module configured to perform, in a process of the control rod stepping from a start rod position to an end rod position, voltage sampling on Gray code bit signals output from the control rod and detected by a rod position detector at a preset frequency to obtain a plurality of data sets, where one data set is obtained in each sampling operation, each sampled data set includes voltage values of the Gray code bit signals obtained in the sampling operation, and the data sets are arranged according to a sampling sequence;
a fourth determination module configured to determine, according to the number of rod positions of the control rod and the plurality of data sets, a calculated voltage value of a target Gray code bit signal corresponding to each rod position from the start rod position to the end rod position;
a fifth determination module configured to determine, for each rod position, a calculation parameter of the rod position according to the calculated voltage value of the target Gray code bit signal of the rod position and the calculated voltage value of the target Gray code bit signal of a next rod position of the rod position; and
a sixth determination module configured to determine, according to the calculation parameter and the rod position interval corresponding to each rod position, a plurality of rod position determination conditions corresponding to each rod position interval.

In one possible implementation, the fourth determination module further includes:
a first determination submodule configured to determine a data set between every two adjacent rod positions according to the number of rod positions of the control rod from the start rod position to the end rod position and the sampling sequence of the plurality of data sets; and
a second determination submodule configured to determine, for each rod position, a calculation set from a plurality of data sets between the rod position and rod positions before and after the rod position, and determine, according to the calculation set, the calculated voltage value of the target Gray code bit signal of the rod position, where the calculation set includes voltage values of a plurality of target Gray code bit signals, and a difference between the voltage values of the plurality of target Gray code bit signals meets a preset condition.

In one possible implementation, the fourth determination module further includes:
a third determination submodule configured to take, for each rod position, a Gray code bit signal with the maximum change in voltage value from the rod position to a next rod position as the target Gray code bit signal.

The description of the apparatus for determining a rod position of a control rod of a pressurized water reactor may refer to the above description of the method for determining a rod position of a control rod of a pressurized water reactor, and will not be repeated here.

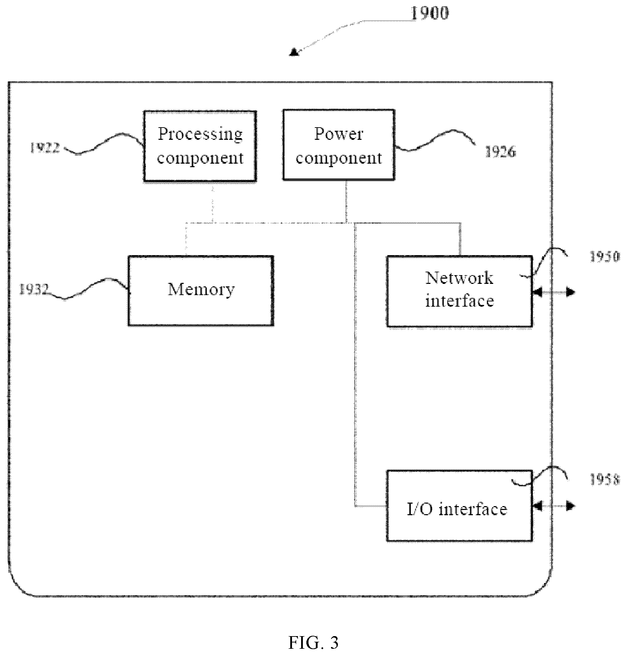

FIG. 3 is a block diagram of an apparatus for determining a rod position of a control rod of a pressurized water reactor according to an exemplary embodiment. For example, the apparatus 1900 may be provided as a server. Referring to FIG. 3, the apparatus 1900 includes a processing component 1922 further including one or more processors, and memory resources, represented by a memory 1932, for storing instructions, e.g., an application, executable by the processing component 1922. The application stored in the memory 1932 may include one or more modules each corresponding to a set of instructions. Further, the processing component 1922 is configured to execute instructions to implement the methods described above.

The apparatus 1900 may further include a power component 1926 configured to perform power management of the apparatus 1900, a wired or wireless network interface 1950 configured to connect the apparatus 1900 to a network, and an input/output (I/O) interface 1958. The apparatus 1900 may be operated based on an operating system, such as WindowsServerTM, MacOSXTM, UnixTM, LinuxTM, FreeBSDTM or the like, stored on the memory 1932.

In one exemplary embodiment, there is further provided a non-volatile computer-readable storage medium, such as a memory 1932 containing computer program instructions which may be executed by the processing component 1922 of the apparatus 1900 to implement the method described above.

The present disclosure may be a system, a method, and/or a computer program product. The computer program product may include a computer-readable storage medium uploaded with computer-readable program instructions for causing a processor to implement various aspects of the present disclosure.

The computer-readable storage medium may be a tangible device that can hold and store instructions for used in an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage medium include: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions stored thereon, and any suitable combination of the foregoing. The computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer-readable program instructions described herein can be downloaded to respective computing/processing devices from a computer-readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers and/or edge servers. The network adapter card or network interface in each computing/processing device receives computer-readable program instructions from the network and forwards the computer-readable program instructions for storage in a computer-readable storage medium within the respective computing/processing device.

The computer program instructions for carrying out operations of the present disclosure may be assembler instructions, instruction set architecture (ISA) instructions, machine instructions, machine-related instructions, microcodes, firmware instructions, state setting data, or source or object codes written in any combination of one or more programming languages, including an object oriented programming language such as Smalltalk, C++, or the like, and conventional procedural programming languages, such as the "C" programming language or similar programming languages. The computer-readable program instructions may execute entirely on the user computer, partly on the user computer, as a stand-alone software package, partly on the user computer and partly on a remote computer or entirely on the remote computer or server. In scenario involving remote computer, the remote computer may be connected to the user computer through any type of network, including a local area network (LAN) or a wide area network (WAN), or by connecting to an external computer (for example, through the Internet provided by an Internet service provider). In some embodiments, aspects of the present disclosure are implemented by personalizing an electronic circuit, such as a programmable logic circuit, a field programmable gate array (FPGA), or a programmable logic array (PLA), with state information of computer-readable program instructions, which can execute the computer-readable program instructions.

Various aspects of the present disclosure have been described herein with reference to flowchart illustrations and/or block diagrams of methods, apparatus (systems), and computer program products according to embodiments of the present disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general purpose computer, special purpose computer, or other programmable data processing apparatus to produce a machine, such that the instructions, when executed via the processor of the computer or other programmable data processing apparatus, create means for implementing the functions/acts specified in flowchart and/or block diagram block or blocks. These computer-readable program instructions may also be stored in a computer-readable storage medium, and direct a computer, a programmable data processing device, and/or other devices to function in a particular manner, such that the computer-readable medium having the instructions stored therein includes an article of manufacture including instructions for implementing aspects of the function/act specified in the flowchart and/or block diagram block or blocks.

The computer-readable program instructions may also be loaded onto a computer, other programmable data processing device, or other device to cause a series of operational steps to be performed on the computer, other programmable data processing device or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagram may represent a module, a program segment, or a portion of instructions including one or more executable instructions for implementing the specified logical function(s). In some alternative implementations, the functions shown in the blocks may occur out of the order shown in the figures. For example, two blocks shown in succession may, in fact, be executed substantially concurrently, or may sometimes be executed in the reverse order, depending upon the functionality involved. It will also be noted that each block in the block diagram and/or flowchart, and combinations of blocks in the block diagram and/or flowchart, may be implemented by a special purpose hardware-based system which performs the specified functions or acts, or by combinations of special purpose hardware and computer instructions.

In one possible implementation, there is provided a pressurized water reactor rod position measurement system, including the apparatus for determining a rod position of a control rod of a pressurized water reactor as described above, and the rod position measurement system is configured to provide real-time rod position indications of control rod groups of the reactor.

Although various embodiments of the present disclosure have been described above, the above description is intended to be illustrative and not exhaustive, and the present disclosure is not limited to the disclosed embodiments. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for determining a rod position of a control rod of a pressurized water reactor, **characterized in that** the method comprises:
step 100, determining a rod position interval to which the control rod currently belongs according to a currently acquired Gray code signal tuning result and a correspondence relationship between Gray code signal tuning results and rod position intervals;
step 101, determining a plurality of rod position determination conditions corresponding to the rod position interval to which the control rod currently belongs, wherein each rod position determination condition corresponds to one rod position, and each rod position determination condition comprises a voltage value interval of a Gray code bit signal;
step 102, judging whether a voltage value of each Gray code bit signal currently acquired is matched with any of determined plurality of rod position determination conditions; and
step 103, taking a rod position corresponding to the rod position determination condition matched with the voltage value of the Gray code bit signal currently acquired as a current measured rod position of the control rod.

2. The method according to claim 1, **characterized in that** the method further comprises:
step 200, performing, in a process of the control rod stepping from a start rod position to an end rod position, voltage sampling on Gray code bit signals output from the control rod and detected by a rod position detector at a preset frequency to obtain a plurality of data sets, wherein one data set is obtained in each sampling operation, each sampled data set comprises voltage values of the Gray code bit signals obtained in the sampling operation, and the data sets are arranged according to a sampling sequence;
step 201, determining, according to the number of rod positions of the control rod and the plurality of data sets, a calculated voltage value of a target Gray code bit signal corresponding to each rod position from the start rod position to the end rod position;
step 202, determining, for each rod position, a calculation parameter of the rod position according to the calculated voltage value of the target Gray code bit signal of the rod position and the calculated voltage value of the target Gray code bit signal of a next rod position of the rod position; and
step 203, determining, according to the calculation parameter and the rod position interval corresponding to each rod position, a plurality of rod position determination conditions corresponding to each rod position interval.

3. The method according to claim 2, **characterized in that** step 201 further comprises:
step 2010, determining a data set between every two adjacent rod positions according to the number of rod positions of the control rod from the start rod position to the end rod position and the sampling sequence of the plurality of data sets; and
step 2011, determining, for each rod position, a calculation set from a plurality of data sets between the rod position and rod positions before and after the rod position, and determining, according to the calculation set, the calculated voltage value of the target Gray code bit signal of the rod position, wherein the calculation set comprises voltage values of a plurality of target Gray code bit signals, and a difference between the voltage values of the plurality of target Gray code bit signals meets a preset condition.

4. The method according to claim 2, **characterized in that** step 201 further comprises:
step 2012, taking, for each rod position, a Gray code bit signal with the maximum change in voltage value from the rod position to a next rod position as the target Gray code bit signal.

5. An apparatus for determining a rod position of a control rod of a pressurized water reactor, **characterized in that** the apparatus comprises:
a first determination module configured to determine a rod position interval to which the control rod currently belongs according to a currently acquired Gray code signal tuning result and a correspondence relationship between Gray code signal tuning results and rod position intervals;
a second determination module configured to determine a plurality of rod position determination conditions corresponding to the rod position interval to which the control rod currently belongs, wherein each rod position determination condition corresponds to one rod position, and each rod position determination condition comprises a voltage value interval of a Gray code bit signal;
a judgment module configured to judge whether a voltage value of each Gray code bit signal currently acquired is matched with any of determined plurality of rod position determination conditions; and
a third determination module configured to take a rod position corresponding to the rod position determination condition matched with the voltage value of the Gray code bit signal currently acquired as a current measured rod position of the control rod.

6. The apparatus according to claim 5, **characterized in that** the apparatus further comprises:
a sampling module configured to perform, in a process of the control rod stepping from a start rod position to an end rod position, voltage sampling on Gray code bit signals output from the control rod and detected by a rod position detector at a preset frequency to obtain a plurality of data sets, wherein one data set is obtained in each sampling operation, each sampled data set comprises voltage values of the Gray code bit signals obtained in the sampling operation, and the data sets are arranged according to a sampling sequence;
a fourth determination module configured to determine, according to the number of rod positions of the control rod and the plurality of data sets, a calculated voltage value of a target Gray code bit signal corresponding to each rod position from the start rod position to the end rod position;
a fifth determination module configured to determine, for each rod position, a calculation parameter of the rod position according to the calculated voltage value of the target Gray code bit signal of the rod position and the calculated voltage value of the target Gray code bit signal of a next rod position of the rod position; and
a sixth determination module configured to determine, according to the calculation parameter and the rod position interval corresponding to each rod position, a plurality of rod position determination conditions corresponding to each rod position interval.

7. The apparatus according to claim 6, **characterized in that** the fourth determination module further comprises:
a first determination submodule configured to determine a data set between every two adjacent rod positions according to the number of rod positions of the control rod from the start rod position to the end rod position and the sampling sequence of the plurality of data sets; and
a second determination submodule configured to determine, for each rod position, a calculation set from a plurality of data sets between the rod position and rod positions before and after the rod position, and determine, according to the calculation set, the calculated voltage value of the target Gray code bit signal of the rod position, wherein the calculation set comprises voltage values of a plurality of target Gray code bit signals, and a difference between the voltage values of the plurality of target Gray code bit signals meets a preset condition.

8. The apparatus according to claim 6, **characterized in that** the fourth determination module further comprises:
a third determination submodule configured to take, for each rod position, a Gray code bit signal with the maximum change in voltage value from the rod position to a next rod position as the target Gray code bit signal.

9. An apparatus for determining a rod position of a control rod of a pressurized water reactor, **characterized in that** the apparatus comprises:
a processor; and
a memory configured to store processor-executable instructions;
wherein the processor is configured to implement the method according to any one of claims 1 to 4.

10. A non-volatile computer-readable storage medium having computer program instructions stored thereon, **characterized in that** the computer program instructions, when executed by a processor, cause the method according to any one of claims 1 to 4 to be implemented.

11. A pressurized water reactor rod position measurement system, **characterized in that** the pressurized water reactor rod position measurement system comprises the apparatus for determining a rod position of a control rod of a pressurized water reactor as claimed in claim 9, wherein the rod position measurement system is configured to provide real-time rod position indications of control rod groups of the reactor.
